# EUROPEAN PATENT APPLICATION

(11) **EP 4 628 436 A1**
(43) Date of publication of application: **08.10.2025**
(21) Application number: 25165977.7
(22) Date of filing: 25.03.2025
(51) Int. Cl.: B65G 54/02

(54) **LINEAR MOTOR CONVEYANCE SYSTEM AND LINEAR MOTOR CONVEYANCE METHOD**

(30) Priority: 03.04.2024 JP 2024060426
(71) Applicant: Pacraft Co., Ltd., Tokyo 108-0014 (JP)
(72) Inventor: Yamane, Noriyuki, Iwakuni-shi, Yamaguchi-ken (JP); Miyanishi, Yuka, Iwakuni-shi, Yamaguchi-ken (JP); Nakagawa, Koichi, Iwakuni-shi, Yamaguchi-ken (JP)
(74) Representative: Grünecker Patent- und Rechtsanwälte PartG mbB

(57) **Abstract**

A linear motor conveyance system includes: at least one carrier that supports an object used for container processing; and a linear motor unit that transports the at least one carrier along a transport track, wherein the transport track includes only a curved track or curved tracks throughout.

## Description

### TECHNICAL FIELD

The present disclosure relates to a linear motor conveyance system and a linear motor conveyance method.

### BACKGROUND ART

Japanese patent application publication No. 2018-172140 discloses a conveyance apparatus that uses a linear motor including electromagnetic coils and permanent magnets to convey bag-shaped containers.

### SUMMARY OF THE INVENTION

One of the objectives of the present disclosure is to provide a technique advantageous for lengthening the transport distance of a carrier in a limited area in linear motor transport in which the carrier is transported by a linear motor unit.

An aspect of the present disclosure is directed to a linear motor conveyance system comprising: at least one carrier that supports an object used for container processing; and a linear motor unit that transports the at least one carrier along a transport track, wherein the transport track includes only a curved track or curved tracks throughout.

The transport track may include only one of positive curvature and negative curvature.

The transport track may include both positive curvature and negative curvature.

The transport track may be an endless track.

The transport track may have one or more ends.

The transport track may include a plurality of endless track sections, each of the plurality of endless track sections being configured as an endless track, and the linear motor unit may transport the at least one carrier in such a manner that the at least one carrier moves from one endless track section to another endless track section while the at least one carrier moves along a curved track.

The linear motor conveyance system may comprise a plurality of processing devices that perform the container processing and include a first processing device and a second processing device, wherein the transport track may include: a first curved track section having one of positive curvature and negative curvature; and a second curved track section having the other of positive curvature and negative curvature, the first processing device may be positioned, along the first curved track section, inside the transport track and performs the container processing on the object supported by a carrier being transported in the first curved track section, and the second processing device may be positioned, along the second curved track section, outside of the transport track and performs the container processing on the object supported by a carrier being transported in the second curved track section.

Another aspect of the present disclosure is directed to a linear motor conveyance method comprising the step of transporting at least one carrier supporting an object used for container processing, along a transport track by a linear motor unit, wherein the transport track includes only a curved track or curved tracks throughout.

According to the present disclosure, it is possible to provide a technique advantageous for lengthening the transport distance of a carrier in a limited area in linear motor transport in which the carrier is transported by a linear motor unit.

### BRIEF DESCRIPTION OF DRAWINGS

Fig. 1 is an enlarged plan view showing an example of a linear motor conveyance system;
Fig. 2 is an enlarged plan view of another example of a linear motor conveyance system;
Fig. 3 is a functional block diagram showing an example of the control configuration of a linear motor conveyance system;
Fig. 4 is a plan view showing an example of a transport track;
Fig. 5 is a plan view showing an example of a transport track;
Fig. 6 is a plan view showing an example of a transport track;
Fig. 7 is a plan view showing an example of a transport track;
Fig. 8 is a plan view showing an example of a transport track;
Fig. 9 is a plan view showing an example of a transport track;
Fig. 10 is a plan view showing an example of a transport track; and
Fig. 11 is a plan view showing an example of a transport track related to a first variant example.

### DETAILED DESCRIPTION

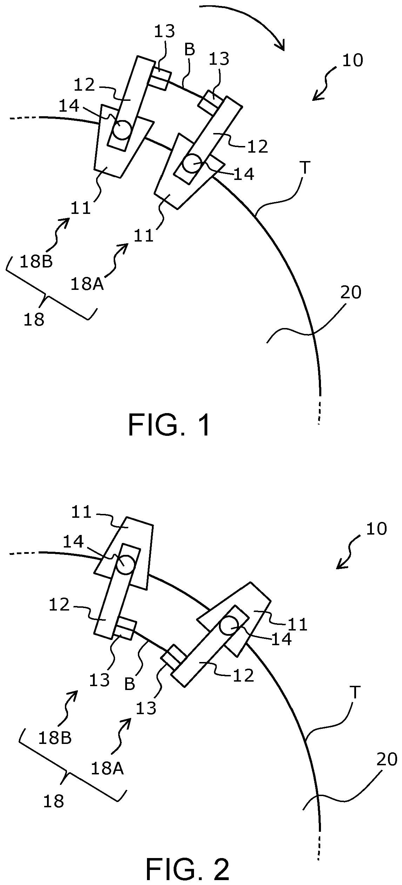

Fig. 1 is an enlarged plan view showing an example of a linear motor conveyance system 10. Fig. 2 is an enlarged plan view showing another example of a linear motor conveyance system 10.

Each of the linear motor conveyance systems 10 shown in Figs. 1 and 2 comprises at least one transport unit 18 and a linear motor unit (transport device) 20.

The transport unit 18 is transported along a transport track T along with an object while supporting the object used for container processing. Here, an object used for container processing is not limited, and for example, a container itself, an attachment thing (such as a spout) which is to be attached to a container by container processing, and an instrument used in container processing may fall under the category of an object used for container processing.

The transport unit 18 in the present example includes a first transport set 18A and a second transport set 18B that form a pair, and can move while supporting a bag (container) B. Each of the first transport set 18A and the second transport set 18B has a carrier 11, an arm 12 attached to the carrier 11 via a support connection 14 extending in a height direction, and a gripper 13 attached to the arm 12. The carrier 11 and the arm 12 may be provided to be able to rotate relative to each other, or may be fixed to each other in terms of a rotation direction to be provided to be basically unable to rotate relative to each other.

The carriers 11 receive a driving force (e.g., magnetic force) from the linear motor unit 20 and are moved along the transport track T according to the driving force. The arms 12 each extend in an outward horizontal direction away from the linear motor unit 20 in the example shown in Fig. 1, while extending in an inward horizontal direction, opposite to the outward horizontal direction, in the example shown in Fig. 2. The arms 12 each extend in a horizontal direction in the examples shown in Figs. 1 and 2, but may each extend in a direction other than a horizontal direction (e.g., in a height direction). The grippers 13 grasp a bag B. In the examples shown in Figs. 1 and 2, the gripper 13 of the first transport set 18A grips one side portion of a bag B while the gripper 13 of the second transport set 18B grips the other side portion of the bag B, so that the bag B is gripped (supported) by the transport unit 18 in a suspended state.

The linear motor unit 20 transports at least one transport unit 18 described above along the transport track T. The linear motor unit 20 propels a transport unit 18 (i.e., a first transport set 18A and a second transport set 18B; in particular, carriers 11) based on linear motor technology. The linear motor technology usable in the linear motor unit 20 is not limited, but typically a magnetic force (attraction force and repulsion force) is applied to each carrier 11 from the linear motor unit 20, causing each carrier 11 to be transported along a transport guide surface in a state where each carrier 11 is floated from the transport guide surface or in a state being in contact with the transport guide surface via rollers or the like. The shape and size of the transport guide surface is not limited, and each carrier 11 may be transported, for example, one-dimensionally along a line-like transport guide surface or may be transported two-dimensionally along a flat transport guide surface. The specific configuration of the linear motor unit 20 is not limited, examples of linear motor units 20 for transporting a transport unit 18 (in particular, carriers 11) are known, and a detailed description of the specific configuration of the linear motor unit 20 is omitted.

The transport track T is set along the outer periphery of the body portion of the linear motor unit 20 in the examples shown in Figs. 1 and 2, but is not limited to this. For example, the transport track T may be set in a region that extends two-dimensionally in a horizontal direction, above the body portion of the linear motor unit 20.

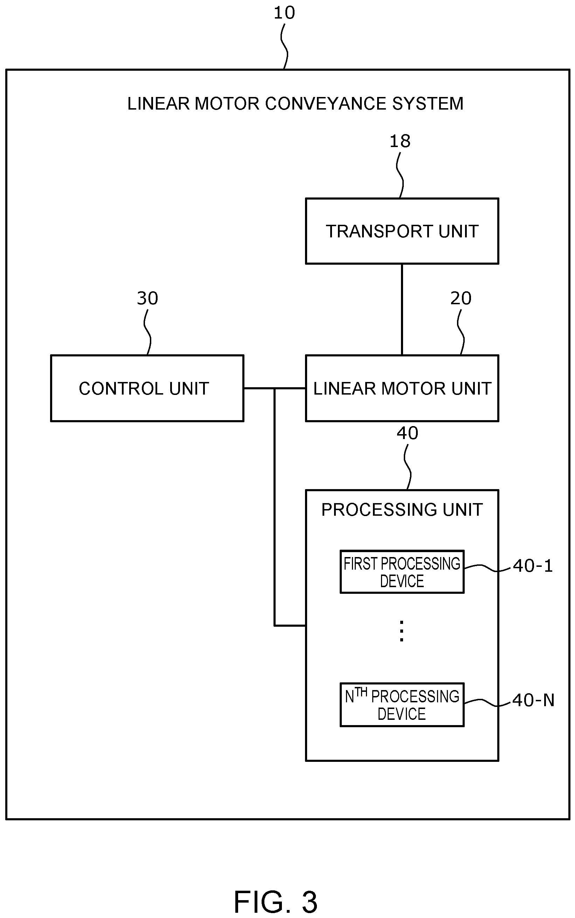

Fig. 3 is a functional block diagram showing an example of the control configuration of the linear motor conveyance system 10.

The linear motor conveyance system 10 shown in Fig. 3 comprises a control unit 30 and a processing unit 40 in addition to the at least one transport unit 18 (carriers 11) and the linear motor unit 20 described above.

The control unit 30 controls the linear motor unit 20 and the processing unit 40, causing the linear motor unit 20 to transport a transport unit 18 while causing the processing unit 40 to perform bag processing (container processing) on a bag B held by the transport unit 18. In this way, by driving various devices under the control of the control unit 30, the linear motor conveyance system 10 carries out a linear motor conveyance method.

The processing unit 40 includes a plurality of processing devices (i.e., a first processing device 40-1 through a N^{th} processing device 40-N (where "N" is an integer greater than or equal to 2)) in the example shown in Fig. 3, but may include only one single processing device.

Each processing device of the processing unit 40 performs bag processing (container processing) related directly or indirectly to a bag B held by a transport unit 18, but the specific processing details are not limited. Therefore, the processing unit 40 may include a processing device that directly uses a bag B and may include a processing device that does not directly use a bag B. As an example, the processing unit 40 may include: a processing device that supplies a bag B (e.g., an empty bag) to a transport unit 18; a processing device that prints on a bag B; a processing device that inspects the condition of a bag B; a processing device that prompts opening of the mouth portion of a bag B (e.g., opening of the upper end portion of a bag B); a processing device that introduces contents (e.g., a liquid material and/or a solid material) into the interior of a bag B via the mouth portion; a processing device that introduces gas (e.g., water vapor, carbon dioxide and/or inert gas) into the interior of a bag B via the mouth portion; a processing device that seals the mouth portion of a bag B; and/or a processing device that sends a bag B (e.g., a product bag) released from a transport unit 18, toward a subsequent stage.

### [Transport track]

In the linear motor conveyance system 10 described above, the transport track T in the present embodiment includes only a curved track(s) throughout.

A curved track here means a track that forms a curved line, and a curved line here means a line having a curvature(s) k that takes a value other than zero (k = 1/Rc ≠ 0; where "Rc" is a radius of curvature). Therefore, the transport track T in the present embodiment does not include a straight line track. A straight line track here means a track that forms a straight line, and a straight line here means a line having a curvature k that takes zero (i.e., k = 0) and having a radius of curvature Rc that is infinite.

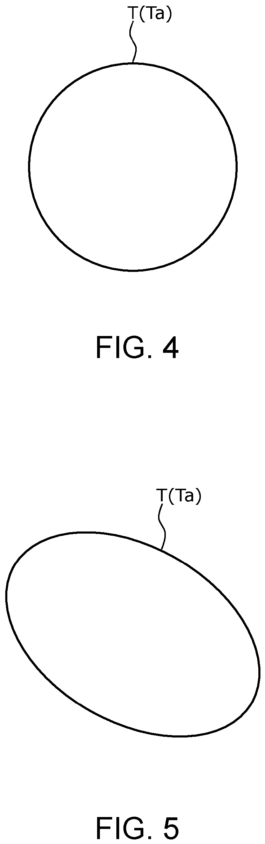

Figs. 4 through 10 are plan views showing examples of a transport track T.

For example, the transport track T may contain only one of positive curvature and negative curvature.

The transport track T shown in Fig. 4 has a shape of precise circle (a circular shape) having a constant magnitude of curvature throughout and no inflection points. The transport track T shown in Fig. 5 has an elliptical shape and no inflection point. The transport tracks T shown in Figs. 4 and 5 are both endless tracks each containing only an endless track section Ta.

Further, the transport track T may have both positive curvature and negative curvature.

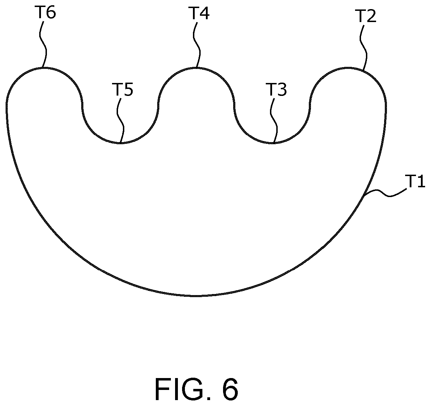

The transport track T shown in Fig. 6 is an endless track that includes a first curved track section T1 through a sixth curved track section T6. With respect to each of "the first curved track section T1 and the second curved track section T2" located next to each other and "the first curved track section T1 and the sixth curved track section T6" located next to each other, the curvature values differ between each other and the sign (positive or negative) of the curvature is the same between those sections.

On the other hand, the sign of the curvature of the third curved track section T3, which is located between the second curved track section T2 and the fourth curved track section T4, is different from the sign of the curvature of the second curved track section T2 and the fourth curved track section T4. Likewise, the sign of the curvature of the fifth curved track section T5, which is located between the fourth curved track section T4 and the sixth curved track section T6, is different from the sign of the curvature of the fourth curved track section T4 and the sixth curved track section T6. In these second curved track section T2 through the sixth curved track section T6, there are inflection points between adjacent curved track sections.

The transport track T may have one or more ends.

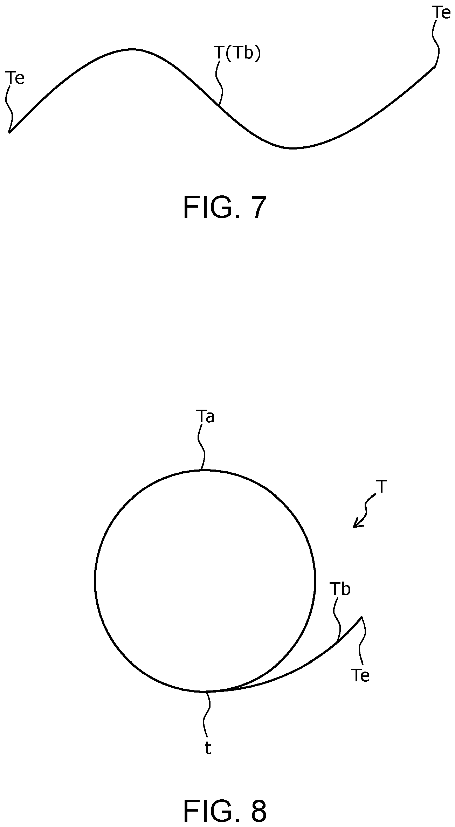

The transport track T shown in Fig. 7 is formed only by a line track section Tb having both ends (i.e., track ends Te) and has a non-endless shape. The line track section Tb is not limited to the example shown in Fig. 7 and may have any curved shape (e.g., waveform shape). A transport unit 18 may be reciprocated by the linear motor unit 20 alternately in the direction from one track end Te to the other track end Te of the transport track T shown in Fig. 7, for example, and from the other track end Te to the one track end Te.

The transport track T shown in Fig. 8 includes an endless track section Ta having a shape of precise circle (an endless shape) and a line track section Tb having a line shape (a non-endless shape) including a track end Te. The line track section Tb extends so as to diverge from a branching point t on the endless track section Ta and has a curvature of a different magnitude from that of the endless track section Ta. The curvature of the endless track section Ta and the curvature of the line track section Tb have the same sign as and different magnitudes (absolute values) from each other in the example shown in Fig. 8, but may have different signs from each other.

The transport track T may include a plurality of endless track sections that are each configured as an endless track. In this case, the linear motor unit 20 may transport at least one transport unit 18 (in particular, a carrier(s) 11) from one endless track section to another endless track section via a connection track section configured as a curved track.

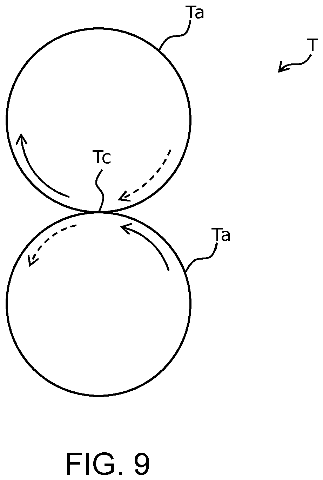

The transport track T shown in Fig. 9 includes two endless track sections Ta that each have a shape of precise circle in such a manner that these endless track sections Ta are provided to be in contact with each other (in particular, to be circumscribed to each other). The arrows in Fig. 9 show an example of the direction of movement of a transport unit 18 on each endless track section Ta. A transport unit 18 moves along the track indicated by the solid arrows when moving from one endless track section Ta (the lower one in Fig. 9) to the other endless track section Ta (the upper one in Fig. 9), and moves along the track indicated by the dotted arrows when moving from the other endless track section Ta (the upper one in Fig. 9) to the one endless track section Ta (the lower one in Fig. 9).

A transport unit 18 is transported by the linear motor unit 20 through curved connection track sections Tc between the two adjacent endless track sections Ta. In the example shown in Fig. 9, the two endless track sections Ta are in point contact with each other, so that the entire connection track section Tc is formed by these two endless track sections Ta and is configured as an S-shaped curved track. Thus, the linear motor unit 20 transports a transport unit 18 (in particular, the carrier 11) in such a manner that the transport unit 18 (in particular, the carrier 11) moves from one endless track section Ta to the other endless track section Ta while moving along a curved track.

When a transport unit 18 is transported from one endless track section to another endless track section, the transport unit 18 may exhibit any behavior and is transported to have an appropriate state in the other endless track section. Such behavior of a transport unit 18 can be based on already known techniques and the detailed description of the behavior is omitted.

The transport track T shown in Fig. 9 includes two endless track sections Ta that each have a shape of precise circle, but the transport track T may include three or more endless track sections Ta, and each endless track section Ta may have any other planar shape other than a precise circle. Further, a connection track section Tc is entirely composed of an endless track section Ta in the example shown in Fig. 9, but may also contain a curved track that does not constitute an endless track section Ta (that is, a curved track that is not included in an endless track section Ta).

A bag B held by a transport unit 18 can undergo any bag processing (container processing) by one or more processing devices while being transported along a transport track T. One or more bag processing devices performing such bag processing are typically installed along a transport track T and apply bag processing to bags B that are moving or intermittently stopped on the transport track T.

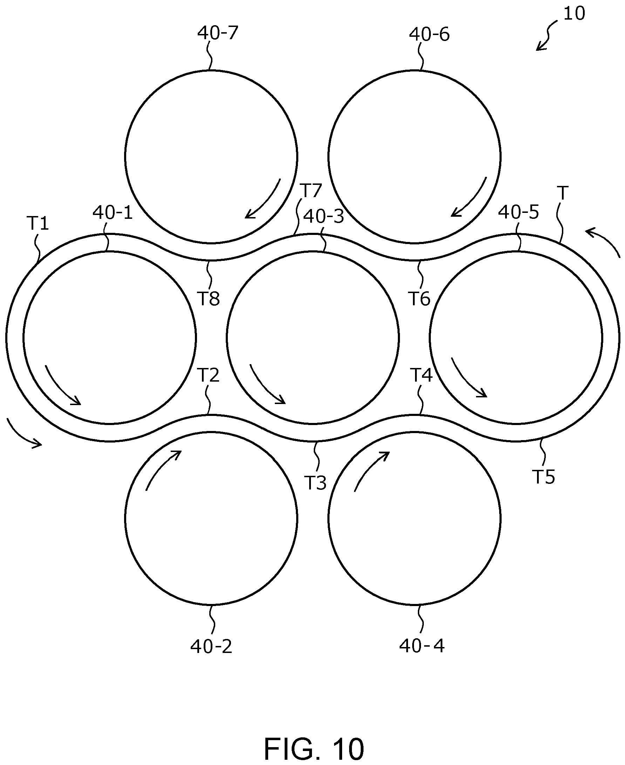

In the example shown in Fig. 10, the transport track T is an endless track including a first curved track section T1 through an eighth curved track section T8, and the linear motor conveyance system 10 comprises a plurality of processing devices including a first processing device 40-1 through a seventh processing device 40-7.

In Fig. 10, the first curved track section T1 through the eighth curved track section T8 are arranged in this order, in a counterclockwise direction, in a continuous manner. The curvature of each of the first curved track section T1 through the eighth curved track section T8 has a different sign than the curvature of other adjacent curved track sections that are located next to it. Specifically, the first curved track section T1, the third curved track section T3, the fifth curved track section T5, and the seventh curved track section T7 are classified as a first curved track section with one of positive curvature and negative curvature. On the other hand, the second curved track section T2, the fourth curved track section T4, the sixth curved track section T6, and the eighth curved track section T8 are classified as a second curved track section with the other of positive curvature and negative curvature.

The first processing device 40-1, the third processing device 40-3 and the fifth processing device 40-5 are located inside the transport track T having a closed-loop shape, while the other second processing device 40-2, the fourth processing device 40-4, the sixth processing device 40-6 and the seventh processing device 40-7 are located outside of the transport track T.

The first processing device 40-1 is positioned along the first curved track section T1 and performs bag processing on a bag B supported by a transport unit 18 (including a carrier 11) that is transported in the first curved track section T1. Similarly, the second processing device 40-2 is positioned along the second curved track section T2 and performs bag processing on a bag B supported by a transport unit 18 that is transported in the second curved track section T2. The third processing device 40-3 is positioned along the third curved track section T3 and performs bag processing on a bag B supported by a transport unit 18 that is transported in the third curved track section T3. The fourth processing device 40-4 is positioned along the fourth curved track section T4 and performs bag processing on a bag B supported by a transport unit 18 that is transported in the fourth curved track section T4. The fifth processing device 40-5 is positioned along the fifth curved track section T5 and performs bag processing on a bag B supported by a transport unit 18 that is transported in the fifth curved track section T5. The sixth processing device 40-6 is positioned along the sixth curved track section T6 and performs bag processing on a bag B supported by a transport unit 18 that is transported in the sixth curved track section T6. The seventh processing device 40-7 is positioned along the eighth curved track section T8 and performs bag processing on a bag B supported by a transport unit 18 that is transported in the eighth curved track section T8.

The third processing device 40-3 in the present example is positioned not only along the third curved track section T3, but also along the seventh curved track section T7. Thus, the third processing device 40-3 may perform bag processing on a bag B supported by a transport unit 18 transported in the seventh curved track section T7 in addition to on a bag B supported by a transport unit 18 transported in the third curved track section T3.

As explained above, according to the linear motor conveyance system 10 comprising the above-mentioned "transport track T including only a curved track(s)" and to the linear motor conveyance method of transporting a transport unit 18 along the above-mentioned transport track T, it is advantageous for increasing the transport distance of a transport unit 18 (including the carrier 11) in a limited area . For example, it is advantageous for lengthening the section of the transport track T that is provided adjacent to one processing device, and it is also advantageous for lengthening the section for bag processing (container processing) on a bag B held by a transport unit 18.

### [First variant example]

An object used for processing using a container, such as a bag B, may be passed and received between two or more transport units 18 that are transported along separate transport tracks T from each other, and may be transported along the two or more separate transport tracks T while being supported by the two or more transport units 18.

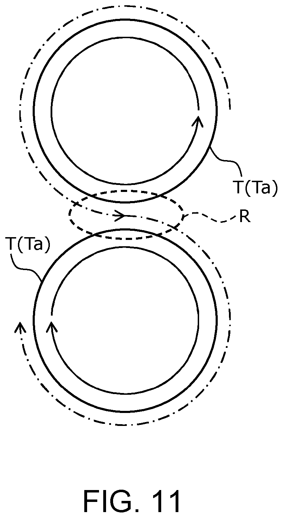

Fig. 11 is a plan view showing an example of the transport track T related to a first variant example. In the example shown in Fig. 11, two transport tracks T (endless track sections Ta) that each have a shape of precise circle are provided. These transport tracks T are spaced apart from each other and are not connected to each other. Unique transport units 18 are provided and assigned to the respective transport tracks T, and each transport unit 18 is transported only along its assigned transport track T and is not transported to another transport track T.

In Fig. 11, the solid arrows indicate the transport tracks of transport units 18 assigned to the respective transport tracks T, and the single-dotted arrow indicates the transport track for an object used for container processing, such as a bag B. In the present example, an object used for container processing is passed and received from a transport unit 18 that moves along one transport track T (the upper one in Fig. 11), to a transport unit 18 that moves along the other transport track T (the lower one in Fig. 11). Specifically, an object used for container processing is transported along one transport track T (the upper one in Fig. 11) while being supported by one transport unit 18, and after that, is transported along the other transport track T (the lower one in Fig. 11) while being supported by another transport unit 18.

The delivery and receipt of an object used for container processing, such as a bag B, between transport units 18 can be carried out in any manner in any area. Typically, an object used for container processing is directly passed and received from one transport unit 18 to another transport unit 18 in an area (see the sign "R" in Fig. 11: a delivery area) containing the position where the transport tracks T are closest to each other.

An object used for container processing, such as a bag B, is passed and received between transport units 18 that are transported along two transport tracks T having a shape of precise circle in the example in Fig. 11, but may be passed and received between transport units 18 that are transported along transport tracks T having any other planar shape (see Figs. 5 through 10). Further, an object used for container processing may be passed and received between three or more transport units 18 provided on three or more transport tracks T, respectively.

### [Other variant examples]

In the embodiment described above, a transport unit 18 includes a plurality of transport sets 18A and 18B, but a transport unit 18 may include only a single transport set. In this case, the linear motor conveyance system 10 may, for example, transport a bag B along a transport track T along with a transport unit 18 while having the single transport set including a carrier 11, an arm 12 and a gripper 13 hold (grip) a specific point (e.g., the upper end) of the bag B.

It should be noted that the embodiments and variations disclosed in this specification are merely examples in all respects and are not to be construed as limiting. The above-described embodiments and variations may be subject to omission, substitution and modification in various forms without departing from the scope and intent of the appended claims. For example, the embodiments and variations described above may be combined in whole or in part, and embodiments other than those described above may be combined with the embodiments or variations described above. Further, the effects of the present disclosure described in this specification are merely examples, and other effects may be brought about.

The technical categories embodying the technical ideas described above are not limited. For example, the above-described technical ideas may be embodied by a computer program having a computer execute one or more procedures (steps) included in a method for manufacturing or using the devices described above. Further, the above-described technical ideas may be embodied by a computer-readable non-transitory recording medium in which such a computer program is recorded.

### [Additional notes]

The technology in the present disclosure may have the following aspects.

### [Aspect 1]

A linear motor conveyance system comprising:
at least one carrier that supports an object used for container processing; and
a linear motor unit that transports the at least one carrier along a transport track,
wherein the transport track includes only a curved track or curved tracks throughout.

### [Aspect 2]

The linear motor conveyance system as defined in aspect 1, wherein the transport track includes only one of positive curvature and negative curvature.

### [Aspect 3]

The linear motor conveyance system as defined in aspect 1, wherein the transport track includes both positive curvature and negative curvature.

### [Aspect 4]

The linear motor conveyance system as defined in any of aspects 1 to 3, wherein the transport track is an endless track.

### [Aspect 5]

The linear motor conveyance system as defined in any of aspects 1 to 3, wherein the transport track has one or more ends.

### [Aspect 6]

The linear motor conveyance system as defined in any of aspects 1 to 5,
wherein the transport track includes a plurality of endless track sections, each of the plurality of endless track sections being configured as an endless track, and
wherein the linear motor unit transports the at least one carrier in such a manner that the at least one carrier moves from one endless track section to another endless track section while the at least one carrier moves along a curved track.

### [Aspect 7]

The linear motor conveyance system as defined in aspect 4 or aspect 6 citing aspect 4, comprising a plurality of processing devices that perform the container processing and include a first processing device and a second processing device,
wherein the transport track includes: a first curved track section having one of positive curvature and negative curvature; and a second curved track section having the other of positive curvature and negative curvature,
wherein the first processing device is positioned, along the first curved track section, inside the transport track and performs the container processing on the object supported by a carrier being transported in the first curved track section, and
wherein the second processing device is positioned, along the second curved track section, outside of the transport track and performs the container processing on the object supported by a carrier being transported in the second curved track section.

### [Aspect 8]

A linear motor conveyance method comprising the step of transporting at least one carrier supporting an object used for container processing, along a transport track by a linear motor unit,
wherein the transport track includes only a curved track or curved tracks throughout.

## Claims

1. A linear motor conveyance system comprising:
at least one carrier that supports an object used for container processing; and
a linear motor unit that transports the at least one carrier along a transport track,
wherein the transport track includes only a curved track or curved tracks throughout.

2. The linear motor conveyance system as defined in claim 1, wherein the transport track includes only one of positive curvature and negative curvature.

3. The linear motor conveyance system as defined in claim 1, wherein the transport track includes both positive curvature and negative curvature.

4. The linear motor conveyance system as defined in any one of claims 1 to 3, wherein the transport track is an endless track.

5. The linear motor conveyance system as defined in any one of claims 1 to 3, wherein the transport track has one or more ends.

6. The linear motor conveyance system as defined in any one of claims 1 to 5,
wherein the transport track includes a plurality of endless track sections, each of the plurality of endless track sections being configured as an endless track, and
wherein the linear motor unit transports the at least one carrier in such a manner that the at least one carrier moves from one endless track section to another endless track section while the at least one carrier moves along a curved track.

7. The linear motor conveyance system as defined in claim 4 or claim 6 citing claim 4, comprising a plurality of processing devices that perform the container processing and include a first processing device and a second processing device,
wherein the transport track includes: a first curved track section having one of positive curvature and negative curvature; and a second curved track section having the other of positive curvature and negative curvature,
wherein the first processing device is positioned, along the first curved track section, inside the transport track and performs the container processing on the object supported by a carrier being transported in the first curved track section, and
wherein the second processing device is positioned, along the second curved track section, outside of the transport track and performs the container processing on the object supported by a carrier being transported in the second curved track section.

8. A linear motor conveyance method comprising the step of transporting at least one carrier supporting an object used for container processing, along a transport track by a linear motor unit,
wherein the transport track includes only a curved track or curved tracks throughout.
